# EUROPEAN PATENT APPLICATION

(11) **EP 4 644 483 A1**
(43) Date of publication of application: **05.11.2025**
(21) Application number: 23912063.7
(22) Date of filing: 25.12.2023
(51) Int. Cl.: C08L 27/12, C08F 259/08

(54) **FLUORINE-CONTAINING COPOLYMER COMPOSITION AND CROSSLINKED PRODUCT OF SAME**

(30) Priority: 28.12.2022 JP 2022212749
(71) Applicant: AGC INC., Chiyoda-ku, Tokyo 1008405 (JP)
(72) Inventor: KUNIMOTO, Akinobu, Tokyo 100-8405 (JP)
(74) Representative: Müller-Boré & Partner Patentanwälte PartG mbB
(86) International application number: PCT/JP2023/046462
(87) International publication number: WO 2024/143284

(57) **Abstract**

A fluorine-containing copolymer composition comprising a fluorine-containing copolymer, a compound (A) having a fluorine atom-containing biphenyl backbone and two or more vinyl groups, a compound (B) represented by the following formula (1), and a crosslinker, wherein a mass ratio of the compound (A) to the compound (B) (the compound (A)/the compound (B)) is 1.5 or less: 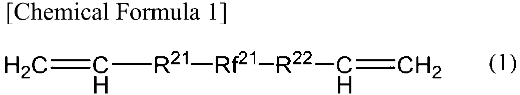 wherein in the formula (1), R²¹ and R²² are each independently -CH₂- or -CF₂-, and Rf²¹ represents a divalent C₁₋₁₀ fluorohydrocarbon group or the fluorohydrocarbon group having an etheric oxygen atom at an end thereof or in a carbon-carbon bond thereof.

## Description

### Technical Field

The present invention relates to a fluorine-containing copolymer composition and a cross-linked product thereof.

### Background Art

Cross-linked products obtained by cross-linking a fluorine-containing copolymer composition have excellent heat resistance, chemical resistance, oil resistance, weather resistance, etc., and are thus used in a wide range of fields, including sealants, diaphragms, cushioning materials, anti-core materials, electric wire coating materials, industrial belts, tubes, hoses, and sheets.

PTL1 describes a fluorine-containing crosslinkable elastomer composition containing a fluorine-containing elastomer and an aromatic compound having two or more crosslinkable unsaturated double bonds.

PTL2 describes a rubber composition having a crosslinking fluororubber and a co-crosslinking agent.

### Citation List

### Patent Literature

PTL1: WO 2015/020004
PTL2: WO 2021/230231

### Summary of Invention

### Technical Problem

In recent years, there has been a demand in various fields for improved performance of cross-linked fluorine-containing copolymer composition products, specifically, cross-linked products with low compression set under high temperature.

Although the cross-linked products of the compositions described in PLT1 and PLT2 have low compression set under high temperature, further improvement is required.

The present invention has been made under these circumstances, and the purpose is to provide a fluorine-containing copolymer composition capable of forming a cross-linked product with low compression set under high temperature, and a cross-linked product thereof.

### Solution to Problem

As a result of intensive study on the above problem, the present inventors have found that a fluorine-containing copolymer composition containing a fluorine-containing copolymer, a specific aromatic compound, a specific compound having two or more polymerizable unsaturated bonds, and a crosslinker can be used to produce a cross-linked product with low compression set under high temperature. Then, the present inventors have arrived at the present invention.

Specifically, the present invention provides the following [1] to [9].
[1] A fluorine-containing copolymer composition comprising a fluorine-containing copolymer, a compound (A) having a fluorine atom-containing biphenyl backbone and two or more vinyl groups, a compound (B) represented by the following formula (1), and a crosslinker,
   wherein a mass ratio of the compound (A) to the compound (B) (the compound (A)/the compound (B)) is 1.5 or less: 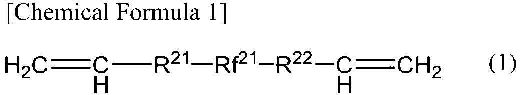
   wherein in the formula (1), R²¹ and R²² are each independently -CH₂- or -CF₂-, and Rf²¹ represents a divalent C₁₋₁₀ fluorohydrocarbon group or the fluorohydrocarbon group having an etheric oxygen atom at an end thereof or in a carbon-carbon bond thereof.
[2] The fluorine-containing copolymer composition according to [1] above, wherein the compound (A) has a content of from 0.1 to 5 parts by mass based on 100 parts by mass of the fluorine-containing copolymer.
[3] The fluorine-containing copolymer composition according to [1] or [2] above, wherein the mass ratio (the compound (A)/the compound (B)) is 0.8 or less.
[4] The fluorine-containing copolymer composition according to any one of [1] to [3] above, wherein the fluorine-containing copolymer comprises a tetrafluoroethylene-based unit (TFE unit) and a perfluoro(alkylvinylether)-based unit (PAVE unit).
[5] The fluorine-containing copolymer composition according to [4] above, wherein based on total 100 parts by mol of the tetrafluoroethylene-based unit (TFE unit) and the perfluoro(alkylvinylether)-based unit (PAVE unit),
   a proportion of the tetrafluoroethylene-based unit (TFE unit) is from 60 to 80 parts by mol and
   a proportion of the perfluoro(alkylvinylether) based unit (PAVE unit) is from 20 to 40 parts by mol.
[6] The fluorine-containing copolymer composition according to any one of [1] to [5] above, wherein the fluorine-containing copolymer comprises a tetrafluoroethylene-based unit (TFE unit), a perfluoro(alkylvinylether)-based unit (PAVE unit), and a unit (DV unit) based on a monomer having two or more polymerizable unsaturated bonds.
[7] The fluorine-containing copolymer composition according to [6] above, wherein based on total 100 parts by mol of the tetrafluoroethylene-based unit (TFE unit), the perfluoro(alkylvinylether)-based unit (PAVE units), and the unit (DV unit) based on a monomer having two or more polymerizable unsaturated bonds,
   a proportion of the tetrafluoroethylene-based unit (TFE unit) is from 60 to 79 parts by mol,
   a proportion of the perfluoro(alkylvinylether)-based unit (PAVE unit) is from 20 to 40 parts by mol, and
   a proportion of the unit (DV unit) based on a monomer having two or more polymerizable unsaturated bonds is from 0.01 to 1 part by mol.
[8] The fluorine-containing copolymer composition according to any one of [1] to [7] above, wherein the compound (B) has a content of from 0.03 to 5 parts by mass based on 100 parts by mass of the fluorine-containing copolymer.
[9] A cross-linked product of the fluorine-containing copolymer composition according to any one of [1] to [8] above.

### Advantageous Effects of Invention

The present invention can provide a fluorine-containing copolymer composition capable of forming a cross-linked product with low compression set under high temperature, and a cross-linked product thereof.

### Description of Embodiments

The meanings of the terms in the present invention are as follows.

The "melting point" means a temperature corresponding to the maximum value of the melting peak measured by differential scanning calorimetry (DSC).

The "boiling point" means a boiling point at atmospheric pressure (1013 hPa), unless otherwise stated.

The "room temperature" means 25°C.

### [Fluorine-containing copolymer composition]

The fluorine-containing copolymer composition of this embodiment is a fluorine-containing copolymer composition including a fluorine-containing copolymer, a compound (A) having a fluorine atom-containing biphenyl backbone and two or more vinyl groups, a compound (B) represented by the following formula (1), and a crosslinker, wherein the mass ratio of the compound (A) to the compound (B) (compound (A)/compound (B)) is 1.5 or less. 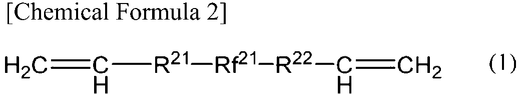 wherein in the formula (1), R²¹ and R²² are each independently -CH₂- or -CF₂-, and Rf²¹ represents a divalent C₁₋₁₀ fluorohydrocarbon group or the fluorohydrocarbon group having an etheric oxygen atom at an end thereof or in a carbon-carbon bond thereof.

The fluorine-containing copolymer composition according to this embodiment may be used to form a cross-linked product with low compression set under high temperature. In addition, in the fluorine-containing copolymer composition of this embodiment, the above compound (A) and the above compound (B) are used in combination as a crosslinking aid. Thus, it is possible to form a cross-linked product with smaller compression set under high temperature than when either of the two is used alone. The details of the reason for this are unknown, but the following reasons are speculated.

That is, the compound (A) and the compound (B) are chemically bonded to the fluorine-containing copolymer by cross-linking to form a cross-linked site. The fluorine atom-containing biphenyl backbone has strong electron-withdrawing properties and increases the bonding energy of the surrounding carbon-carbon bonds. Accordingly, the use of compound (A) may be likely to reduce the degradation of the cross-linked site. In addition, the crosslink density is considered to increase when the compound (A) and the compound (B) are used together. As a result, it is assumed that the fluorine-containing copolymer composition according to this embodiment may be used to form a cross-linked product with low compression set under high temperature.

### <Fluorine-containing copolymer>

The fluorine-containing copolymer is not particularly limited as long as the copolymer contains a fluorine atom, but preferably has a fluorine atom-containing monomer (hereinafter, also referred to as a "fluorine-containing monomer") unit, and is preferably a perfluoropolymer from the viewpoint of potentially making small compression set when a cross-linked product is placed under high temperature for a long period (e.g., referred to as compression set when a cross-linked product is stored at 250°C for 70 hours and then subjected to a compression set test; hereinafter, also referred to as "compression set after long-term heating").

The "perfluoropolymer" herein refers to a polymer that is substantially free of a hydrogen atom bonded to a carbon atom, has a fluorine atom in place of the hydrogen atom, and has a main backbone consisting of a chain of carbon atoms. The side chains of the perfluoropolymer may have a multivalent atom other than a carbon atom, and the multivalent atom is preferably an oxygen atom.

Here, the "substantially free of a hydrogen atom" means that the content of hydrogen atom in the perfluoropolymer is 0.5% by mass or less, preferably 0.1% by mass or less, more preferably 0.07% by mass or less, and still more preferably 0.05% by mass or less. Favorable heat resistance and chemical resistance are easily obtained when the hydrogen atom content is within the above range.

### <Fluorine-containing monomer>

Specific examples of the fluorine-containing monomer include tetrafluoroethylene (hereinafter, also referred to as "TFE"), perfluoro(alkylvinylether) (hereinafter, also referred to as "PAVE"), vinylidene fluoride (hereinafter, also referred to as "VDF"), hexafluoropropylene (hereinafter, also referred to as "HFP"), chlorotrifluoroethylene (hereinafter, also referred to as "CTFE"), or 3,3,3,2-tetrafluoro-1-propene.

One kind of the fluorine-containing monomer may be used singly, or two or more kinds thereof may be used in combination.

From the viewpoint of excellent polymerization reactivity, it is preferable to use, as PAVE, a monomer represented by the following formula (2):

CF₂=CF-O-Rf³¹ (2)

wherein in the formula (2), Rf³¹ is a C₁₋₁₀ perfluoroalkyl group or a C₂₋₁₀ perfluoroalkyl group (also referred to as an oxaperfluoroalkyl group) having one or more etheric oxygen atoms between carbon atoms.

From the viewpoint of superior polymerization reactivity, the number of carbon atoms in Rf³¹ is preferably from 1 to 8, more preferably from 1 to 6, still more preferably from 1 to 5, and most preferably from 1 to 3.

The perfluoroalkyl group or the oxaperfluoroalkyl group may be linear or branched.

Specific examples of PAVE include perfluoro(methylvinylether) (hereinafter, also referred to as "PMVE"), perfluoro(ethylvinylether) (hereinafter, also referred to as "PEVE"), perfluoro(propylvinylether) (hereinafter, also referred to as "PPVE"), perfluoro(methoxyethylvinylether), perfluoro(ethoxyethylvinl ether), or perfluoro(propoxypropylvinylether).

Among these, PMVE, PEVE, and PPVE are preferred, PMVE and PPVE are more preferred, and PMVE is most preferred.

### <Other monomer>

The fluorine-containing copolymer may have a unit based on a monomer other than the above (hereinafter, also referred to as "other monomer"). Specific examples of the other monomer include a monomer having two or more polymerizable unsaturated bonds (hereinafter, also referred to as "DV"), a monomer represented by the following formula (4), ethylene, propylene, or a monomer with fluorine and a halogen atom other than chlorine (e.g., bromotrifluoroethylene, iodotrifluoroethylene). They may be used singly, or two or more kinds thereof may be mixed and used.

### <<DV>>

The DV unit is a unit based on a monomer having two or more polymerizable unsaturated bonds.

Specific examples of the polymerizable unsaturated bond include a carbon atom-carbon atom double bond or a carbon atom-carbon atom triple bond.

From the viewpoint of superior polymerization reactivity, the number of polymerizable unsaturated bonds in DV is preferably from 2 to 6, more preferably 2 or 3, and still more preferably 2.

From the viewpoint of making smaller compression set of the cross-linked product under high temperature, it is preferable that the DV further has a fluorine atom(s).

From the viewpoint of making smaller compression set of the cross-linked product under high temperature, the DV is preferably a monomer represented by formula (3):

(CR⁴¹R⁴²=CR⁴³)ₐ₂R⁴⁴ (3)

wherein in the formula (3), R⁴¹, R⁴², and R⁴³ are each independently a hydrogen atom, a fluorine atom, a methyl group, or a trifluoromethyl group, a2 represents an integer of 2 to 6, and R⁴⁴ is an a2-valent C₁₋₁₀ perfluorohydrocarbon group or the perfluorohydrocarbon group having an etheric oxygen atom at an end thereof or in a carbon-carbon bond thereof. The plurality of R⁴¹, the plurality of R⁴², the plurality of R⁴³, and the plurality of R⁴⁴ may be each independently the same or different, and are preferably identical to one another.

Here, a2 is preferably 2 or 3, and more preferably 2.

From the viewpoint of superior polymerization reactivity of DV, it is preferred that R⁴¹, R⁴², and R⁴³ are fluorine atoms or hydrogen atoms, and it is more preferred that all of R⁴¹, R⁴², and R⁴³ are fluorine atoms or all are hydrogen atoms, and from the viewpoint of heat resistance and chemical resistance of cross-linked products, it is further preferred that all of R⁴¹, R⁴², and R⁴³ are fluorine atoms.

R⁴⁴ may be linear, branched, or cyclic, and is preferably linear or branched and more preferably linear. The number of carbon atoms in R⁴⁴ is preferably from 2 to 8, more preferably from 3 to 7, still more preferably from 3 to 6, and most preferably from 3 to 5.

R⁴⁴ may or may not have an etheric oxygen atom, but preferably has an etheric oxygen atom from the viewpoint of superior crosslinking reactivity.

The number of etheric oxygen atoms in R⁴⁴ is preferably from 1 to 6, more preferably from 1 to 3, and still more preferably 1 or 2. The etheric oxygen atom in R⁴⁴ is preferably present at an end of R⁴⁴.

Among the monomers represented by formula (3), specific examples of the suitable monomer include a monomer represented by formula (3A) and a monomer represented by formula (3B).

(CF₂=CF)₂R⁴⁵ (3A)

wherein in the formula (3A), R⁴⁵ represents a divalent C₁₋₁₀ perfluorohydrocarbon group or the perfluorohydrocarbon group having an etheric oxygen atom at an end thereof or in a carbon-carbon bond thereof.

Specific examples of the monomer represented by formula (3A) include CF₂=CFO(CF₂)₂OCF=CF₂, CF₂=CFO(CF₂)₃OCF=CF₂, CF₂=CFO(CF₂)₄OCF=CF₂, CF₂=CFO(CF₂)₆OCF=CF₂, CF₂=CFO(CF₂)₈OCF=CF₂, CF₂=CFO(CF₂)₂OCF(CF₃)CF₂OCF=CF₂, CF₂=CFO(CF₂)₂O(CF(CF₃)CF₂O)₂CF=CF₂, CF₂=CFOCF₂O(CF₂CF₂O)₂CF=CF₂, CF₂=CFO(CF₂O)₃O(CF(CF₃)CF₂O)₂CF=CF₂, CF₂=CFOCF₂CF(CF₃)O(CF₂)₂OCF(CF₃)CF₂OCF=CF₂, or CF₂=CFOCF₂CF₂O(CF₃O)₂CF₂CF₂OCF=CF₂.

Among the monomers represented by formula (3A), specific examples of the more suitable monomer include CF₂=CFO(CF₂)₃OCF=CF₂ (hereinafter, also referred to as "C3DVE") or CF₂=CFO(CF₂)₄OCF=CF₂ (hereinafter, also referred to as "C4DVE").

(CH₂=CH)₂R⁴⁶ (3B)

wherein in the formula (3B), R⁴⁶ represents a divalent C₁₋₁₀ perfluorohydrocarbon group or the perfluorohydrocarbon group having an etheric oxygen atom at an end thereof or in a carbon-carbon bond thereof.

Specific examples of the monomer represented by formula (3B) include CH₂=CH(CF₂)₂CH=CH₂, CH₂=CH(CF₂)₄CH=CH₂, or CH₂=CH(CF₂)₆CH=CH₂.

Among the monomers represented by formula (3B), specific examples of the more suitable monomer include CH₂=CH(CF₂)₆CH=CH₂ (hereinafter, also referred to as "C6DV").

When DV is copolymerized, the polymerizable double bond at the end of DV reacts during polymerization to give a fluorine-containing copolymer with a branched chain.

### <<Monomer represented by formula (4)>>

The monomer represented by formula (4) is as follows:

CF₂=CF-O-R^{f5} (4)

wherein in the formula (4), R^{f5} represents a C₁₋₈ perfluoroalkyl group containing 1 to 5 etheric oxygen atoms. The number of carbon atoms in R^{f5} is preferably from 1 to 6 and more preferably from 1 to 5.

Specific examples of the monomer represented by formula (4) include perfluoro(3,6-dioxa-1-heptene), perfluoro(3,6-dioxa-1-octene), or perfluoro(5-methyl-3,6-dioxa-1-nonene).

### <<Combination of each unit included in fluorine-containing copolymer>>

Suitable combinations of each unit included in the fluorine-containing copolymer are shown below.
Combination 1: Combination of TFE unit and PAVE unit
Combination 2: Combination of TFE unit, PAVE unit, and DV unit
Combination 3: Combination of VdF unit and HFP unit.
Combination 4: Combination of VdF unit, HFP unit, and TFE unit.

Among these, from the viewpoint of heat resistance and chemical resistance of cross-linked products, combination 1 and combination 2 are preferred, and combination 2 is more preferred.

Preferred copolymerization compositions (molar ratios) are shown below. If the range is those described below, the heat resistance and chemical resistance of the cross-linked product are excellent.

### Combination 1: TFE unit/PAVE unit

Based on total 100 parts by mol of TFE and PAVE units, the proportion of the TFE unit is from 60 to 80 parts by mol, and the proportion of the PAVE unit is from 20 to 40 parts by mol.

### Combination 2: TFE unit/PAVE unit/DV unit

Based on total 100 parts by mol of TFE, PAVE, and DV units (three units), the proportion of the TFE unit is from 60 to 79 parts by mol, the proportion of the PAVE unit is from 20 to 40 parts by mol, and the proportion of the DV unit is from 0.01 to 1 part by mol.

### Combination 3: VdF unit/HFP unit

Based on total 100 parts by mol of VdF and HFP units, the proportion of the VdF unit is from 60 to 95 parts by mol, and the proportion of the HFP unit is from 5 to 40 parts by mol.

### Combination 4: VdF unit/HFP unit/TFE unit

Based on total 100 parts by mol of VdF, HFP, and TFE units (three units), the proportion of the VdF unit is from 30 to 50 parts by mol, the proportion of the HFP unit is from 5 to 45 parts by mol, and the proportion of the TFE unit is from 5 to 65 parts by mol.

### <<Iodine atom in fluorine-containing copolymer>>

The fluorine-containing copolymer may have an iodine atom. In this case, it is preferable that the fluorine-containing copolymer (polymer chain) has an iodine atom at an end.

Examples of the iodine atom include an iodine atom derived from an iodo compound that functions as the below-described chain transfer agent, or an iodine atom in a unit based on an iodine atom-containing monomer among other halogen atom-containing monomers such as iodotrifluoroethylene as described above. Preferred is the iodine atom derived from an iodo compound that functions as a chain transfer agent.

When the fluorine-containing copolymer has an iodine atom, the content based on total mass of the fluorine-containing copolymer is preferably from 0.01 to 5.0% by mass, more preferably from 0.05 to 2.0% by mass, and still more from 0.05 to 1.0% by mass. When the iodine atom content is within the above range, the crosslinking reactivity of the fluorine-containing copolymer is improved and the mechanical properties of the cross-linked product are thus excellent.

The fluorine-containing copolymer included in the fluorine-containing copolymer composition of the present invention is preferably an iodine atom-containing perfluoropolymer. When the fluorine-containing copolymer is an iodine atom-containing perfluoropolymer, the cross-linking reaction proceeds relatively quickly, and it is considered that more iodine atoms are desorbed from the fluorine-containing copolymer.

From the viewpoint of maintaining heat resistance and rubber properties, the content of the fluorine-containing copolymer based on total mass of the present composition is preferably from 60 to 99% by mass, more preferably from 70 to 99% by mass, and still more preferably from 80 to 99% by mass.

### <Method for producing fluorine-containing copolymer>

Examples of the method for producing a fluorine-containing copolymer include a method of copolymerizing the above monomer in the presence of a radical polymerization initiator.

The radical polymerization initiator is preferably a water-soluble polymerization initiator or a redox polymerization initiator.

Specific examples of the water-soluble polymerization initiator include persulfates such as ammonium persulfate, sodium persulfate, potassium persulfate or organic polymerization initiators such as dicuccinic acid peroxide, azobisisobutylamidine dihydrochloride. Among them, persulfates are preferred, and ammonium persulfate is more preferred.

Examples of the redox polymerization initiator include a polymerization initiator in which persulfates and a reducing agent are combined. Among these, a polymerization initiator capable of polymerizing each monomer at a polymerization temperature in the range of 0 to 60°C is preferred.

Specific examples of the persulfates constituting a redox polymerization initiator include an alkali metal salt of persulfates, such as ammonium persulfate, sodium persulfate, or potassium persulfate. Ammonium persulfate is preferred. Specific examples of the reducing agent used in combination with persulfates include thiosulfates, sulfites, hydrogen sulfites, pyrosulfites, or hydroxymethane sulfinates. Hydroxymethane sulfinates are preferred, and sodium hydroxymethanesulfinate is more preferred.

In the method for producing a fluorine-containing copolymer, the above monomer may be copolymerized in the presence of a chain transfer agent together with a radical polymerization initiator.

The chain transfer agent is preferably an iodo compound and more preferably an iodo compound represented by formula RI₂. In the above formula, R represents an alkylene group or perfluoroalkylene group containing 3 or more (preferably 3 to 8) carbon atoms.

Specific examples of the iodo compound represented by formula RI₂ include 1,3-diiodopropane, 1,4-diiodobutane, 1,6-diiodohexane, 1,8-diiodooctane, 1,3-diiodo-perfluoropropane, 1,4-diiodo-perfluorobutane, 1,6-diiodo-perfluorohexane, or 1,8-diiodo-perfluorooctane. They may be used singly, or two or more kinds thereof may be mixed and used.

The iodo compound is preferably an iodo compound having a perfluoroalkylene group, and more preferably 1,4-diiodo-perfluorobutane.

If the above monomer is copolymerized in the presence of such an iodo compound, an iodine atom can be introduced into the fluorine-containing copolymer.

For details of components other than the above used in the production of the fluorine-containing copolymer and the production method, one can consult the method described in paragraphs 0019 to 0034 of WO 2010/082633.

### <Compound (A)>

The compound (A) is a compound having a fluorine atom-containing biphenyl backbone and two or more vinyl groups (-CH=CH₂).

### The compound (A) is used as a crosslinking aid.

Conventionally, when a crosslinking aid used for crosslinking of a fluorine-containing copolymer in a fluorine-containing copolymer composition contains a hydrogen atom, the cross-linked product may have insufficient heat resistance. However, in the present invention, the crosslink density can be improved by using the compound (B) in combination. Therefore, even if the compound (A), which is a crosslinkable aromatic compound, contains a hydrogen atom, the cross-linked product has excellent heat resistance.

The number of vinyl groups (-CH=CH₂) in the compound (A) is preferably from 2 to 4, more preferably from 2 to 3, and most preferably 2. When two or more vinyl groups are present, the compound (A) functions as a crosslinking aid. When the number of vinyl groups is 4 or less, gelation is less likely to occur.

The compound (A) is preferably a compound having a fluorine atom-containing biphenyl backbone and two or more groups (5) represented by the following formula (5). 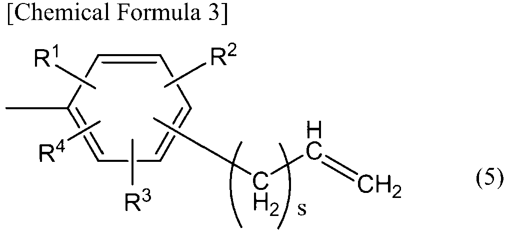 wherein in the formula (5), s is 0 or 1 and R¹ to R⁴ are each independently a hydrogen atom or a fluorine atom.

In the formula (5), s is preferably 0 from the viewpoint of excellent crosslinking reactivity.

In addition, from the viewpoint of excellent crosslinking reactivity, it is preferred that at least one of R¹, R², R³, and R⁴ is a hydrogen atom, and it is more preferred that R¹, R², R³, and R⁴ are each a hydrogen atom. The higher the number of hydrogen atoms among R¹, R², R³, and R⁴, the better the crosslinking reactivity of the fluorine-containing copolymer in the fluorine-containing copolymer composition. In the present invention, because the structure contains a benzene ring, which is a conjugated system with high bonding energy, the cross-linked product has excellent heat resistance even if the group (5) contains a hydrogen atom.

Specific examples of the group (5) include a vinyl-substituted phenyl group or an allyl-substituted phenyl group. A vinyl-substituted phenyl group is preferred because of their high crosslinking reactivity and high crosslink density.

The compound (A) is preferably a compound having a fluorine atom-containing biphenyl backbone and two or more groups (6) represented by the following formula (6). 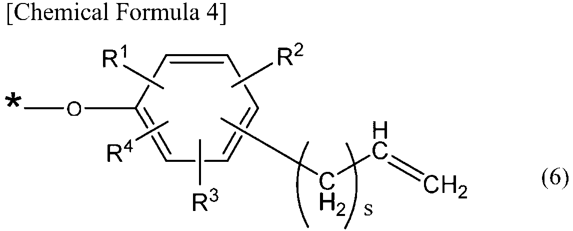 wherein in the formula (6), s and R¹ to R⁴ are the same as s and R¹ to R⁴ in the formula (5), and * is a bond attached to a carbon atom in the ring constituting the biphenylene backbone.

The compound (A) may have one, two, or more fluorine atom-containing biphenyl backbones, but preferably has one of them because the synthesis is easy.

Among the 12 carbon atoms constituting the biphenyl backbone, the 2 carbon atoms are preferably attached a vinyl group-containing group. It is preferable that a fluorine atom is bonded to some or all of the remaining 8 carbon atoms constituting the biphenyl backbone. Since the bonding energy is enhanced by the fluorine atom-mediated electron withdrawing, fluorine atoms are preferably bonded to all of the remaining 8 carbon atoms.

The vinyl group-containing group is preferably group (5) or group (6), and from the viewpoint of improving the electron-withdrawing effect of the fluorine atom, it is more preferably group (6).

The compound (A) is a compound (A1) represented by the following formula (7). 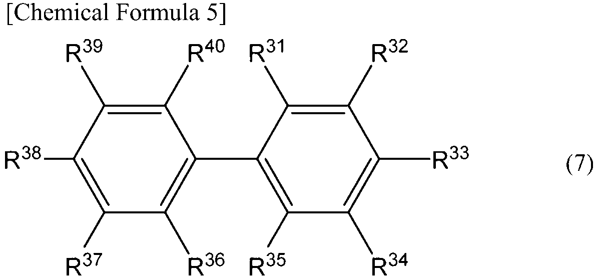 wherein in the formula (7), any one of R³¹ to R³⁵ is a single bond attached to * of the above group (6), any one of R³⁶ to R⁴⁰ is a single bond attached to * of the above group (6), and R³¹ to R³⁵ not attached to the above group (6) and R³⁶ to R⁴⁰ not attached to the above group (6) are fluorine atoms.

From the viewpoint of making the structure easy to be in contact with the fluorine-containing copolymer, R³³ and R³⁸ are each preferably a single bond attached to * of the above group (6).

The molecular weight of the compound (A) is preferably from 300 to 2,000 and more preferably from 350 to 1,000. When the molecular weight is in this range, the fluorine-containing copolymer in the fluorine-containing copolymer composition has higher crosslinking reactivity, and the resulting cross-linked product tends to have better heat resistance and chemical resistance.

The compound (A) is more preferably a compound represented by the following formula (a) (molecular weight: 534.4) in terms of superior effects of the present invention.

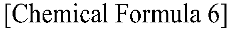

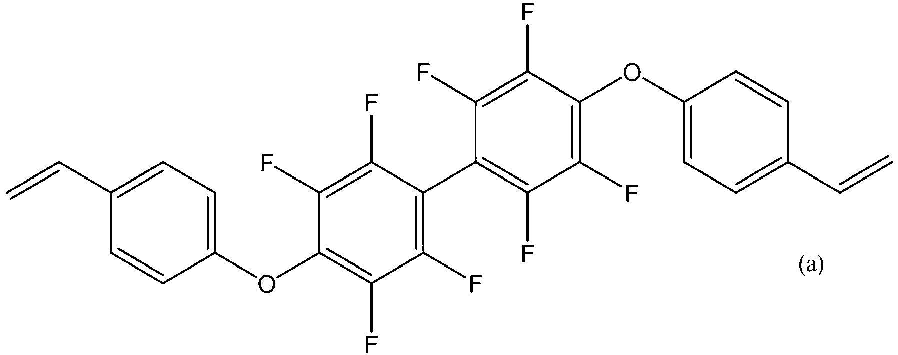

### <Method for producing compound (A)>

For the method for producing a compound (A), one can consult the method described in WO 20101082633.

### <Content of compound (A)>

The content of the compound (A) is preferably 0.1 to 5 parts by mass based on 100 parts by mass of the fluorine-containing copolymer.

When the content is 0.1 parts by mass or more, the proportion that can be bonded to the compound (B) increases, thereby improving crosslinking performance and heat resistance. When the content is 5 parts by mass or less, the effect of inhibiting the self-crosslinking of the compound (A) is exerted. From these viewpoints, the content of the compound (A) based on 100 parts by mass of the fluorine-containing copolymer is more preferably from 0.5 to 4 parts by mass, still more preferably from 0.5 to 3 parts by mass, and most preferably from 1 to 2 parts by mass.

### <Compound (B)>

The compound (B) is a compound represented by the following formula (1). 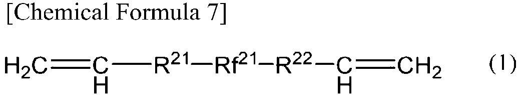 wherein in the formula (1), R²¹ and R²² are each independently -CH₂- or -CF₂-, and Rf²¹ represents a divalent C₁₋₁₀ fluorohydrocarbon group or the fluorohydrocarbon group having an etheric oxygen atom at an end thereof or in a carbon-carbon bond thereof.

The compound (B) is a compound having two or more polymerizable unsaturated bonds and is used as a crosslinking aid to improve the crosslinking reactivity of the fluorine-containing copolymer.

The fluorohydrocarbon group in Rf²¹ is preferably a perfluorohydrocarbon group because of the superior heat resistance of the cross-linked product.

Rf²¹ may be linear, branched, or cyclic, and is preferably linear or branched and more preferably linear. The number of carbon atoms in Rf²¹ is preferably from 2 to 8, and more preferably from 3 to 7.

When Rf²¹ has an etheric oxygen atom, the number of etheric oxygen atoms in Rf²¹ is preferably from 1 to 6, more preferably from 1 to 3, and still more preferably 1 or 2. When Rf²¹ has an etheric oxygen atom, the etheric oxygen atom is preferably present at an end of Rf²¹.

Specific examples of the compound (B) are the same as those of the monomer represented by formula (3A) or formula (3B). C3DVE, C4DVE, CH₂=CH(CF₂)₂CH=CH₂, CH₂=CH(CF₂)₄CH=CH₂, and C6DV are preferred. C6DV is more preferred in terms of smaller compression set after long-term heating of the cross-linked product.

The content of the compound (B) based on 100 parts by mass of the fluorine-containing copolymer is preferably from 0.03 to 5 parts by mass, more preferably from 0.1 to 4 parts by mass, and still more preferably from 0.3 to 3 parts by mass. If the content is the lower limit of the above range or more, the compression set of the cross-linked product is smaller, and if the content is the upper limit of the above range or less, the crosslinking reactivity is superior.

The mass ratio of the compound (A) to the compound (B) (compound (A)/compound (B)) is preferably 1.5 or less, more preferably 1.0 or less, still more preferably 0.8 or less, and still more preferably less than 0.6. When the ratio is 1.5 or less, the bonding between the compound (A), the compound (B), and the fluorine-containing copolymer is well balanced. This can elicit the effects of making smaller compression set while suppressing cracking of the molded product.

In addition, the mass ratio (compound (A)/compound (B)) is preferably 0.1 or higher, more preferably 0.3 or higher, and still more preferably 0.5 or higher. When the mass ratio is 0.5 or higher, the fluorine-containing copolymer, the compound (A), and the compound (B) are well balanced. This results in a cross-linked fluorine-containing copolymer product with a favorable crosslink density.

From this viewpoint, the mass ratio (compound (A)/compound (B)) is preferably from 0.1 to 1.5, more preferably from 0.5 to 1.0, and still more preferably from 0.5 to 0.8.

The total content of the compound (A) and the compound (B) based on 100 parts by mass of the fluorine-containing copolymer is preferably from 0.03 to 8 parts by mass, more preferably from 0.1 to 5 parts by mass, and still more preferably from 0.3 to 4 parts by mass. If the content is the lower limit of the above range or more, the compression set of the cross-linked product is smaller, and if the content is the upper limit of the above range or less, the crosslinking reactivity is superior.

### <Crosslinker>

Examples of the crosslinker include an organic peroxide.

Specific examples of the organic peroxide include dialkyl peroxides, a,a'-bis(*tert-*butylperoxy)-p-diisopropylbenzene, a,a'-bis(*tert*-butylperoxy)-m-diisopropylbenzene, benzoyl peroxide, *tert*-butylperoxybenzene, 2,5-dimethyl-2,5-di(benzoylperoxy)hexane, *tert-*butylcumylperoxide, or dicumylperoxide.

Specific examples of the dialkyl peroxides include 1,1-di(*tert*-butylperoxy)-3,3,5-trimethylcyclohexane, 2,5-dimethylhexane-2,5-dihydroxyperoxide, 2,5-dimethyl-2,5-di(*tert-*butylperoxy)hexane, 2,5-dimethyl-2,5-di(*tert*-butylperoxy)-3-hexine, *tert*-butylperoxymaleic acid, or *tert*-butylperoxyisopropyl carbonate.

They may be used singly, or two or more kinds thereof may be mixed and used.

The content of the organic peroxide based on 100 parts by mass of the fluorine-containing copolymer is preferably from 0.3 to 10 parts by mass, more preferably from 0.3 to 5 parts by mass, and still more preferably from 0.5 to 3 parts by mass. If the content of the organic peroxide is within the above range, the cross-linked product has an excellent balance between the strength and the elongation.

### <Other crosslinking aid>

The present composition may or may not contain a crosslinking aid other than the above compound (A) and the above compound (B) (hereinafter, also referred to as "other crosslinking aid").

Examples of the crosslinking aid other than the compound having two or more crosslinkable unsaturated double bonds include triallyl isocyanurate (TAIC), trimethallyl isocyanurate (TMAIC), triallyl cyanurate (TAC), trimethallyl cyanurate (TMAC), methyl diarylisocyanurate (MeDAIC), or a diallylisocyanurate dimer (DAIC-dimer). They may be used singly, or two or more kinds thereof may be mixed and used.

A crosslinking aid other than the compound having two or more crosslinkable unsaturated double bonds may be included. In this case, the content based on the mass of the fluorine-containing copolymer is preferably from 0.1 to 3% by mass, more preferably from 0.1 to 2% by mass, and still more preferably from 0.1 to 1% by mass.

### <Additional components>

The present composition may contain additional components other than those listed above as long as the effects of the invention are not impaired. Examples of the additional components include acid acceptors (e.g., fatty acid esters, fatty acid metal salts, oxides of divalent metals (e.g., magnesium oxide, calcium oxide, zinc oxide, lead oxide), phosphorus compounds), fillers and reinforcement materials (e.g., carbon black, barium sulfate, calcium metasilicate, calcium carbonate, titanium dioxide, silicon dioxide, polytetrafluoroethylene (PTFE), a tetrafluoroethylene-perfluoro(alkylvinylether)copolymer (PFA), clay, talc), scorch retardants (e.g., phenolic hydroxyl group-containing compounds such as bisphenol A, quinones such as hydroquinone, a-methylstyrene dimers such as 2,4-di(3-isopropylphenyl)-4-methyl-1-pentene), crown ethers (e.g., 18-crown-6), or mold release agents (e.g., sodium stearate, calcium stearate). They may be used singly, or two or more kinds thereof may be mixed and used.

When the present composition contains silicon dioxide powder among the additional components mentioned above, the resistance to oxygen plasma irradiation of the cross-linked product obtained by using the composition is improved. Such a cross-linked product is suitable, for example, for parts of semiconductor manufacturing equipment in which oxygen plasma is implemented.

The present composition may contain at least one of PTFE powder and PFA powder among the above additional components. In this case, the resistance to plasma irradiation, which uses a fluorine-based gas of the cross-linked product obtained by using this composition is improved. Such a cross-linked product is suitable, for example, for parts of semiconductor manufacturing equipment in which plasma using a fluorine-based gas is implemented.

The present composition may contain additional components. In this case, the total content of the additional components based on 100 parts by mass of the fluorine-containing copolymer is preferably more than 0.1 parts by mass and 30 parts by mass or less, more preferably from 1 to 10 parts by mass, and still more preferably from 1 to 5 parts by mass.

Examples of the method for preparing the present composition includes a method of mixing the above-described respective components. The respective components may be mixed using a mixing device such as a roll, a kneader, a Banbury mixer, or an extruder.

In addition, after the above respective components are mixed to prepare a mixture, the mixture may be molded. Specific examples of the method of molding a mixture include compression molding, injection molding, extrusion molding, calendering, or molding by dipping or coating, after dissolution in a solvent, into or onto, for instance, a substrate.

### [Cross-linked product]

The cross-linked product of the present invention is a cross-linked product of the above-mentioned fluorine-containing copolymer composition.

The method of cross-linking the fluorine-containing copolymer in the fluorine-containing copolymer composition is preferably a method of cross-linking the fluorine-containing copolymer composition by heating.

Specific examples of the heating-mediated cross-linking method include heat press cross-linking, steam cross-linking, or hot air cross-linking. From among these methods, one can select the appropriate one in consideration of the shape and use of the fluorine-containing copolymer composition.

The heating conditions is preferably at 100 to 400°C for 1 second to 24 hours.

The cross-linked product prepared by heating (primary cross-linking) the fluorine-containing copolymer composition may be secondarily cross-linked by further heating. The secondary cross-linking can stabilize or improve the mechanical properties, compressive set, and other properties of the cross-linked product.

When primary cross-linking and secondary cross-linking are performed, a heating temperature during the primary cross-linking is preferably from 100 to 400°C, more preferably from 120 to 200°C, and still more preferably from 140 to 180°C.

When primary cross-linking and secondary cross-linking are performed, a heating temperature during the secondary cross-linking is preferably from 80 to 350°C, more preferably from 140 to 300°C, and still more preferably from 220 to 260°C.

When primary cross-linking and secondary cross-linking are performed, a heating time of the primary cross-linking is preferably from 1 second to 60 minutes, more preferably from 1 minute to 40 minutes, and still more preferably from 5 minutes to 30 minutes.

When primary cross-linking and secondary cross-linking are performed, a heating time of the secondary cross-linking is preferably from 30 minutes to 48 hours, more preferably from 2 hours to 32 hours, and still more preferably from 3 hours to 25 hours.

The heating conditions during the secondary cross-linking is preferably at 80 to 350°C for 30 minutes to 48 hours.

Examples of the cross-linking method other than cross-linking of the fluorine-containing copolymer by heating include a method including irradiating the fluorine-containing copolymer composition with radiation to cross-link the fluorine-containing copolymer. Specific examples of the radiation used for irradiation include electron beams or ultraviolet rays.

### <Physical properties of cross-linked product>

The compression set rate of the cross-linked product at 250°C for 70 hours is preferably 42% or less, and more preferably 36% or less, and still more preferably 30% or less, because the fluorine-containing copolymer is well cross-linked and the shape recovery of the cross-linked product after pressurization is superior.

The compression set rate of the cross-linked product at 250°C for 70 hours is measured by the procedure described in the Examples section below.

### <Applications of cross-linked product>

The cross-linked product is suitable for materials such as O-rings, seats, gaskets, oil seals, diaphragms, or V-rings. The cross-linked product is applicable to applications such as heat-resistant and chemical-resistant sealing materials, heat-resistant and oil-resistant sealing materials, electric wire coating materials, sealing materials for semiconductor manufacturing devices, sealing materials for liquid crystal display panel manufacturing equipment, sealing materials for light emitting diode manufacturing equipment, corrosion-resistant rubber coating materials, sealing materials for urea-resistant grease, etc., rubber coating materials, adhesive rubbers, hoses, tubes, calender sheets (rolls), sponges, rubber rolls, oil drilling members, heat dissipating sheets, solution cross-linked materials, rubber sponges, bearing seals (e.g.,urea-resistant grease), linings (chemical resistant), insulation sheets for automobiles, insulation sheets for electronic devices, rubber bands for watches, packing for endoscopes (amine-resistant), bellows hoses (processed from calender sheets), water heater packing/valves, fenders (for marine engineering, ships), fiber/nonwoven fabrics (e.g., protective clothing), base sealing materials, rubber gloves, stators of single-shaft eccentric screw pumps, components for urea-SCR systems, anti-vibration agents, damping agents, sealing agents, additives for other materials, and/or toys.

### Examples

Hereinafter, the embodiments of the present invention are further described in detail with reference to Examples. The present invention, however, is not limited to the following Examples.

Examples 1 to 5 are Examples, and Examples 6 to 13 are Comparative Examples.

### (Hardness)

Three test pieces were prepared by punching out a plate-shaped cross-linked material (thickness: 1 mm) with a No. 4 dumbbell.

The hardness (Shore-A) of each prepared test piece was measured using a Type A durometer in accordance with JIS K 6253-3:2012. The test was conducted using three test pieces, and the arithmetic mean of the values obtained by measuring the three test pieces was recorded. Note that an automatic hardness tester for rubber (trade name: "Digitest", manufactured by H Barleys) was used as the measuring instrument.

### (Tensile strength (tensile hardness), tensile elongation (elongation), and 100% modulus)

Three test pieces were prepared by punching out a plate-shaped cross-linked material (thickness: 1 mm) with a No. 4 dumbbell.

Tensile strength (tensile hardness), tensile elongation (elongation), and 100% modulus were measured on each prepared test piece in accordance with JIS K 6251:2010 (corresponding international standard ISO37:2005). The test was conducted using the respective three test pieces, and the arithmetic mean of the values obtained by measuring the three test pieces was recorded.

Note that a tensile tester with data processing (trade name: "Quick Reader TS-2530", manufactured by Ueshima Seisakusho Co., Ltd.) was used as the measuring instrument.

### (Compression set)

Three P26 O-ring test pieces were prepared in accordance with JIS B 2401-1:2012. In accordance with JIS K 6262:2013, the compression set (%) was calculated for each prepared test piece when held at the temperature designated in Table 1 for the time period designated in Table 1. The compression set was calculated based on the formula below. The test was conducted using three test pieces, and the arithmetic mean of the values calculated using the three test pieces was recorded. However, when there was a test piece cracked while held at each temperature, the compressive set of only the test piece(s) that did not crack was calculated and the arithmetic mean of the values obtained was recorded.

The closer the compression set is to 0%, the better the recovery of the cross-linked material, i.e., the better cross-linked performance is. Compression set (%) = (Original thickness of test piece - Thickness of test piece at 30 minutes after removal from compression apparatus)/(Original thickness of test piece - Thickness of spacer) × 100.

### [Specific gravity of fluorine-containing copolymer and cross-linked product]

The specific gravity of the fluorine-containing copolymer or cross-linked product was measured using a specific gravity meter (manufactured by SHINKO DENSHI CO., LTD.) in accordance with JIS K 6220-1:2015.

### (To measure composition of fluorine-containing copolymer)

The content (mol%) of each unit in the fluorine-containing copolymer was calculated by ¹⁹F-nuclear magnetic resonance (NMR) analysis. However, the content of propylene unit was calculated from ¹³C-nuclear magnetic resonance (NMR) analysis.

The content of iodine atom in the fluorine-containing copolymer was calculated using an apparatus in which an automatic sample combustion device, namely a pretreatment device for ion chromatography, (model AQF-100; manufactured by Mitsubishi Chemical Analytech Co., Ltd.) and an ion chromatograph were combined.

### [Production of fluorine-containing copolymer 1]

Fluorine-containing copolymer 1 was obtained by the method described in paragraphs 0061-0065 of WO 2010/079849.

The molar ratio of each unit in the fluorine-containing copolymer 1 was TFE unit:PMVE unit:C3DVE unit = 71.4:28.4:0.2, and the content of iodine atom was 0.10% by mass.

### [Production of fluorine-containing copolymer 2]

Fluorine-containing copolymer 2 was obtained by referring the method described in paragraphs 0061-0065 of WO 2010/079849 while the amount of the monomer added was adjusted.

The molar ratio of each unit in the fluorine-containing copolymer 2 was TFE unit:PMVE unit:C3DVE unit = 65.3:34.5:0.2, and the content of iodine atom was 0.10% by mass.

### [Synthesis of compound (a)]

The compound (a) was obtained by the method described in Synthesis Example 3 in paragraph 0141 of JP 6304253 B.

The obtained compound (a) was analyzed by NMR and DSC. The results are described below.
¹H-NMR, ¹⁹F-NMR spectra;
¹H-NMR (300.4 MHz, solvent: heavy acetone, standard: tetramethylsilane (TMS), internal standard: bis(trifluoromethyl)benzene) δ(ppm): 7.55, 7.20, 6.75, 5.80, 5.25.

¹⁹F-NMR (282.7 MHz, solvent: heavy acetone, standard: CFCl₃, internal standard: bis(trifluoromethyl)benzene) δ(ppm): -140.0, -155.5.

Tg = -1.6°C, Tm1 = 79.5°C, Tm2 = 107.3°C.

The above results have demonstrated that the compound (a) (FRCA100) has the structure shown below.

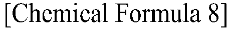

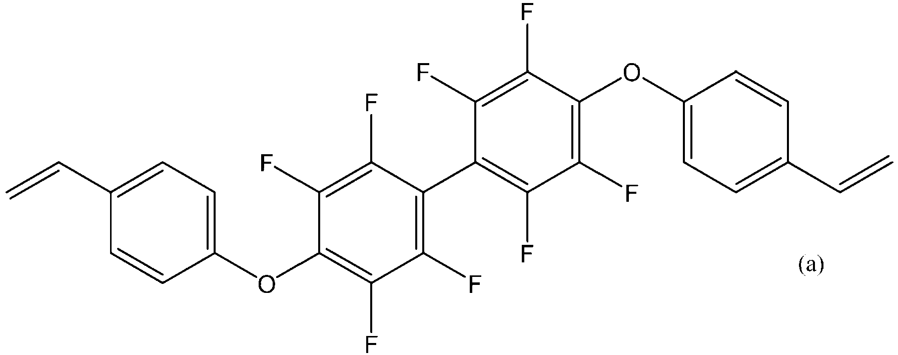

### [Examples 1 to 13]

The components listed in Table 1 were blended at the blending ratios shown in Table 1 and kneaded using two rolls at room temperature to prepare each mixed fluorine-containing copolymer composition. The resulting fluorine-containing copolymer composition was heat-pressed under the primary cross-linking conditions shown in Table 1 (primary cross-linking) to obtain a cross-linked product with a thickness of 1 mm. Next, under an air atmosphere, the cross-linked product was heated using an oven under the secondary cross-linking conditions shown in Table 1 (secondary cross-linking). The cross-linked product was then cooled to room temperature to produce the cross-linked product of each of Examples 1 to 13.

Each cross-linked product obtained was used to measure the physical properties described above. Table 1 shows the measured results.

Each component listed in Table 1, except for the fluorine-containing copolymer, is overviewed below.
·C6DV: CH₂=CH(CF₂)₆CH=CH₂, manufactured by Tosoh Finechem Corporation
·TAIC-WH60: trade name, triallylisocyanurate, manufactured by Mitsubishi Chemical Corporation
·PERHEXA 25B: trade name, 2,5-dimethyl-2,5-di(tert-butylperoxy)hexane, organic peroxide, manufactured by NOF CORPORATION
·TOCP: tri-n-octylphosphine, manufactured by Hokko Chemical Industry Co., Ltd.
·Ca stearate: calcium stearate
·ZnO: zinc oxide
·PFR5920M: trade name, fluorine-containing copolymer composition (pre-compound), manufactured by Solvay

**Table 1**

| | | | Unit | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|---|
| Component | Fluorine-containing copolymer | Copolymer 1 (TFE/PMVE/C3DVE =71.4/28.4/0.2) | (parts by mass) | 100 | 100 | 100 | 100 | 100 | 100 | 100 | 100 | 100 | 100 | 100 | | |
| | | Copolymer 2 (TFE/PMVE/C3DVE -65.3/34.5/0.2) | (parts by mass) | | | | | | | | | | | | 100 | |
| | Compound (A) | FRCA100 | (parts by mass) | 2.0 | 1.5 | 1.0 | 1.5 | 1.0 | 1.0 | 2.0 | 2.0 | | | 3.0 | 3.0 | |
| | Compound (B) | C6DV | (parts by mass) | 2.0 | 1.5 | 1.0 | 2.0 | 2.0 | 0.5 | | | 2.0 | | | | |
| | Other crosslinking aid | TAIC-WH60 | (parts by mass) | | | | | | | | | | 3.0 | 3.0 | 3.0 | |
| | Crosslinker | PERHEXA 25B | (parts by mass) | 1.0 | 1.0 | 1.0 | 1.0 | 1.0 | 1.0 | 1.0 | 1.0 | 1.0 | 1.0 | 1.0 | 1.0 | 1 |
| | Additional Additives | TOCP | (parts by mass) | | | | | | | | 0.2 | 0.2 | | | | |
| | | Ca stearate | (parts by mass) | 1.0 | 1.0 | 1.0 | 1.0 | 1.0 | 1.0 | 1.0 | | | 1.0 | 1.0 | 1.0 | |
| | | ZnO | (parts by mass) | 1.5 | 1.5 | 1.5 | 1.5 | 1.5 | 1.5 | | | | 1.5 | 1.5 | 1.5 | |
| | Fluorine-containing copolymer composition | PFR5920M | (parts by mass) | | | | | | | | | | | | | 100 |
| | FRCA100/C6DV mass ratio | | | 1.0 | 1.0 | 1.0 | 0.75 | 0.5 | 2.0 | - | - | - | - | - | - | - |
| Vulcanizing conditions | Primary vulcanization (press vulcanization) | | - | 170°C × 20 min | | | | | | | | 170°C × 10 min | 170°C × 20 min | | | 160°C × 12 min |
| | Secondary vulcanization | | | 250°C × 4 hrs | | | | | | | | 250°C × 4 hrs | 250°C × 4 hrs | | | 230°C × 24 hrs |
| | Normal test (*No. 4 dumbbell) | Hardness | - | 71.4 | 70.3 | 68.2 | 69.4 | 67.6 | 68.9 | 70.3 | 72.1 | 67.0 | 73.4 | 75.4 | 69.0 | |
| | | Tensile strength | (MPa) | 26.0 | 26.4 | 27.2 | 28.7 | 29.3 | 27.6 | 20.3 | 18.4 | 32.8 | 26.4 | 24.8 | 24.4 | |
| | | 100% Modulus | (MPa) | 4.8 | 3.8 | 3.5 | 3.7 | 3.3 | 3.8 | 4.4 | 3.8 | 2.9 | 5.0 | 8.1 | 7.1 | |
| | | Elongation | (%) | 206 | 230 | 217 | 216 | 220 | 234 | 242 | 220 | 243 | 198 | 160 | 189 | |
| | | Specific gravity | - | 2.05 | 2.04 | 2.05 | 2.06 | 2.08 | 2.05 | 2.04 | 2.03 | 2.07 | 2.05 | 2.02 | - | |
| | Cracking after heating | 200°C × 70 hrs | - | 0/3 | - | - | - | - | - | 0/3 | 1/3 | - | 0/3 | 2/3 | - | - |
| | | 230°C × 70 hrs | - | 0/3 | - | - | - | - | - | 0/3 | 2/3 | - | 1/3 | 3/3 | - | - |
| | | 250°C × 70 hrs | - | 0/3 | 1/3 | 0/3 | 0/3 | 0/3 | 0/3 | 0/3 | 1/3 | 0/3 | 3/3 | 2/3 | - | - |
| | | 260°C × 70 hrs | - | 0/3 | 0/3 | 0/3 | 0/3 | 0/3 | 0/3 | - | - | 0/3 | 3/3 | 3/3 | 0/3 | 0/3 |
| | Compression set (O-ring) | 200°C × 70 hrs | - | 20.5 | - | - | - | - | - | 57.8 | 80.8 | - | 7.6 | 12.0 | - | - |
| | | 230°C × 70 hrs | - | 28.1 | - | - | - | - | - | 64.3 | 82.9 | - | 18.9 | Unmeasurable | - | - |
| | | 250°C × 70 hrs | - | 34.6 | 31.5 | 33.9 | 35.5 | 29.4 | 52.5 | 75.6 | 89.8 | 43.1 | Unmeasurable | 29.8 | - | - |
| | | 260°C × 70 hrs | - | 36.7 | 34.8 | 36.5 | 40.8 | 35.8 | 57.6 | - | - | 45.8 | Unmeasurable | Unmeasurable | 43.6 | 61.9 |

As shown in Table 1, it has been demonstrated that the fluorine-containing copolymer composition containing a fluorine-containing copolymer, a compound (A), a compound (B), and a crosslinker while the mass ratio (compound (A)/compound (B)) is 1.5 or less (Examples 1 to 5) can be used to form a cross-linked product with low compression set under high temperature.

## Claims

1. A fluorine-containing copolymer composition comprising a fluorine-containing copolymer, a compound (A) having a fluorine atom-containing biphenyl backbone and two or more vinyl groups, a compound (B) represented by the following formula (1), and a crosslinker,
wherein a mass ratio of the compound (A) to the compound (B) (the compound (A)/the compound (B)) is 1.5 or less: 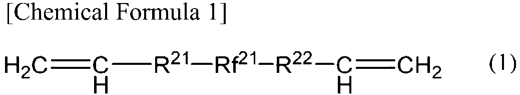
wherein in the formula (1), R²¹ and R²² are each independently -CH₂- or -CF₂-, and Rf²¹ represents a divalent C₁₋₁₀ fluorohydrocarbon group or the fluorohydrocarbon group having an etheric oxygen atom at an end thereof or in a carbon-carbon bond thereof.

2. The fluorine-containing copolymer composition according to claim 1, wherein the compound (A) has a content of from 0.1 to 5 parts by mass based on 100 parts by mass of the fluorine-containing copolymer.

3. The fluorine-containing copolymer composition according to claim 1 or 2, wherein the mass ratio (the compound (A)/the compound (B)) is 0.8 or less.

4. The fluorine-containing copolymer composition according to claim 1 or 2, wherein the fluorine-containing copolymer comprises a tetrafluoroethylene-based unit (TFE unit) and a perfluoro(alkylvinylether)-based unit (PAVE unit).

5. The fluorine-containing copolymer composition according to claim 4, wherein based on total 100 parts by mol of the tetrafluoroethylene-based unit (TFE unit) and the perfluoro(alkylvinylether)-based unit (PAVE unit),
a proportion of the tetrafluoroethylene-based unit (TFE unit) is from 60 to 80 parts by mol and
a proportion of the perfluoro(alkylvinylether) based unit (PAVE unit) is from 20 to 40 parts by mol.

6. The fluorine-containing copolymer composition according to claim 1 or 2, wherein the fluorine-containing copolymer comprises a tetrafluoroethylene-based unit (TFE unit), a perfluoro(alkylvinylether)-based unit (PAVE unit), and a unit (DV unit) based on a monomer having two or more polymerizable unsaturated bonds.

7. The fluorine-containing copolymer composition according to claim 6, wherein based on total 100 parts by mol of the tetrafluoroethylene-based unit (TFE unit), the perfluoro(alkylvinylether)-based unit (PAVE units), and the unit (DV unit) based on a monomer having two or more polymerizable unsaturated bonds,
a proportion of the tetrafluoroethylene-based unit (TFE unit) is from 60 to 79 parts by mol,
a proportion of the perfluoro(alkylvinylether)-based unit (PAVE unit) is from 20 to 39 parts by mol, and
a proportion of the unit (DV unit) based on a monomer having two or more polymerizable unsaturated bonds is from 0.01 to 1 part by mol.

8. The fluorine-containing copolymer composition according to claim 1 or 2, wherein the compound (B) has a content of from 0.03 to 5 parts by mass based on 100 parts by mass of the fluorine-containing copolymer.

9. A cross-linked product of the fluorine-containing copolymer composition according to claim 1 or 2.
